# EUROPEAN PATENT APPLICATION

(11) **EP 4 814 276 A1**
(43) Date of publication of application: **30.09.2026**
(21) Application number: 25198828.3
(22) Date of filing: 28.08.2025
(51) Int. Cl.: F02C 3/22, F02C 6/08

(54) **PROPULSION AND ELECTRICAL SYSTEM FOR AN AIRCRAFT INCLUDING A FUEL CELL AND A TURBINE ENGINE**

(30) Priority: 27.03.2025 IT 202500006384; 24.07.2025 US 202519279272
(71) Applicant: GE Avio S.r.l., 10040 Rivalta di Torino (TO) (IT)
(72) Inventor: MARTINA, Vincenzo, 10040 Rivalta di Torino (IT); LOPEZ RUIZ, Jesus Pedro, 28035 madrid (ES); IGNESTI, Enrico, 50143 Firenze (IT)
(74) Representative: Openshaw & Co.

(57) **Abstract**

A propulsion and electrical system (20, 22, 24, 26) for an aircraft (10) comprises a turbine engine (100) including a compressor (110) configured to generate compressed air (147) containing oxygen. A portion of the compressed air is provided as bleed air (230) to a bleed air valve assembly (300, 302, 304, 306). The bleed air valve assembly is configured to regulate the bleed air (230) to generate pressurised air (260) containing oxygen. A fuel cell (210) is fluidly connected to a hydrogen source (250) and to the bleed air valve assembly (300, 302, 304, 306), and is configured to receive the pressurised air (260) and the hydrogen (252) to generate electrical power (218). The bleed air (230) may include high-pressure bleed air (244) and low-pressure bleed air (242) extracted from different stages of the compressor (110). The bleed air valve assembly may also be connected to an ambient air source (226) and include an ejector (350, 360) or bypass flow paths (346, 348).

## Description

### STATEMENT REGARDING FEDERALLY SPONSORED RESEARCH OR

### DEVELOPMENT

This invention was co-funded by the European Union under Grant Agreement No. 101102020.

### TECHNICAL FIELD

The present disclosure relates to turbine engines, particularly, turbine engines for aircraft.

### BACKGROUND

Turbine engines used in aircraft generally include a fan and a turbo-engine arranged in flow communication with one another. A combustor is arranged in the turbo-engine to generate combustion gases for driving a turbine in the turbo-engine of the turbine engine. The combustion gases are then typically exhausted from the turbine engine to the atmosphere.

### BRIEF DESCRIPTION OF THE DRAWINGS

Features and advantages of the present disclosure will be apparent from the following description of various exemplary embodiments, as illustrated in the accompanying drawings, wherein like reference numbers generally indicate identical, functionally similar, and/or structurally similar elements.
FIG. 1 is a schematic view of an aircraft including a propulsion and electrical system having turbine engines and a fuel cell system according to an embodiment of the present disclosure.
FIG. 2A is a schematic, cross-sectional view, taken along line 2-2 in FIG. 1, of one turbine engine of the aircraft shown in FIG. 1.
FIG. 2B is a schematic, cross-sectional view, of a turbine engine, taken from a perspective similar to that of FIG. 2A, showing a variation of the propulsion and electrical system.
FIG. 2C is a schematic, cross-sectional view, of a turbine engine, taken from a perspective similar to that of FIG. 2A, showing a variation of the propulsion and electrical system.
FIG. 2D is a schematic, cross-sectional view, of a turbine engine, taken from a perspective similar to that of FIG. 2A, showing a variation of the propulsion and electrical system.
FIG. 3 is a schematic view of the fuel cell system of the propulsion and electrical system in the aircraft shown in FIG. 1.
FIG. 4 is a schematic view of a bleed air valve assembly according to an embodiment that may be used in the fuel cell system shown in FIG. 3.
FIG. 5 is a schematic view of a bleed air valve assembly according to an embodiment that may be used in the fuel cell system shown in FIG. 3.
FIG. 6 is a schematic view of a bleed air valve assembly according to an embodiment that may be used in the fuel cell system shown in FIG. 3.
FIG. 7 is a flow chart showing a method of controlling the fuel cell system and the bleed air valve assembly of the propulsion and electrical system.
FIG. 8 is a flow chart showing a method of controlling the fuel cell system and the bleed air valve assembly of the propulsion and electrical system.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments are discussed in detail below. While specific embodiments are discussed, this is done for illustration purposes only. A person skilled in the relevant art will recognize that other components and configurations may be used without departing from the present disclosure.

As used herein, the terms "first" and "second" may be used interchangeably to distinguish one component from another and are not intended to signify location or importance of the individual components.

The terms "forward" and "aft" refer to relative positions within a gas turbine engine or vehicle, and refer to the normal operational attitude of the gas turbine engine or vehicle. For example, with regard to a gas turbine engine, forward refers to a position closer to an engine inlet, and aft refers to a position closer to an engine nozzle or an exhaust.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

The singular forms "a," "an," and "the" include plural references unless the context clearly dictates otherwise.

Here and throughout the specification and claims, range limitations are combined and interchanged. Such ranges are identified and include all the sub-ranges contained therein unless context or language indicates otherwise. For example, all ranges disclosed herein are inclusive of the endpoints, and the endpoints are independently combinable with each other.

As noted above, the aircraft may have a thermal engine, such as a turbine engine. The aircraft can have a fuel cell onboard that is used to produce electricity for various uses. The fuel cell can include an anode and a cathode, separated by an electrolyte. A fuel, such as hydrogen, is fed to the anode, and oxygen, such as within air, is fed to the cathode. The anode can include a catalyst that separates hydrogen molecules into protons and electrons, which take different paths to the cathode. The electrons go through an external circuit, creating a flow of electricity. The protons migrate through the electrolyte to the cathode, where they unite with the oxygen and the electrons to produce water and heat.

The oxygen provided to the fuel cell may be provided in the form of air, such as air drawn from the environment surrounding the aircraft. The fuel cell thus requires a certain amount of air to be combined with hydrogen in the electrical power generation process. The required air pressure at the fuel cell inlet depends on a requested power output, varying between approximately four bar at maximum power and one (1) bar at idle power. To meet these air demands, particularly, when the aircraft is stationary, a compressor can be included in the fuel cell system to draw air into the fuel cell system and to pressurize the air to the necessary pressure.

If the compressor is provided as a separate component of the propulsion and electrical system, the compressor requires electrical power to run during operation, thus reducing overall fuel cell system net power output and net system efficiency. In embodiments discussed herein, the turbine engine includes a compressor, and the fuel cell is fluidly coupled to the compressor of the turbine engine to receive bleed air from the compressor as a pressurized air source for the air being provided to the fuel cell. By using the compressor of the turbine engine, a separate compressor for the fuel cell system can be eliminated, increasing the efficiency of the fuel cell system and reducing the weight of the fuel cell system. To facilitate the use of the bleed air, a bleed air valve assembly can be fluidly coupled to the compressor to receive the bleed air and positionable to regulate the bleed air used to generate pressurized air containing oxygen for the fuel cell. As will be discussed in more detail below, the bleed air valve assembly enables the compressor of the turbine engine to provide the required pressurized air to the fuel cell over a range of operating conditions for the aircraft and the turbine engine.

The fuel cell can provide electrical power for various uses on board the aircraft including various uses for the turbine engine. The fuel cell can be used, for example, to provide power to a motor that, in turn, operates the compressor to improve a compressor operability margin (e.g., power insertion).

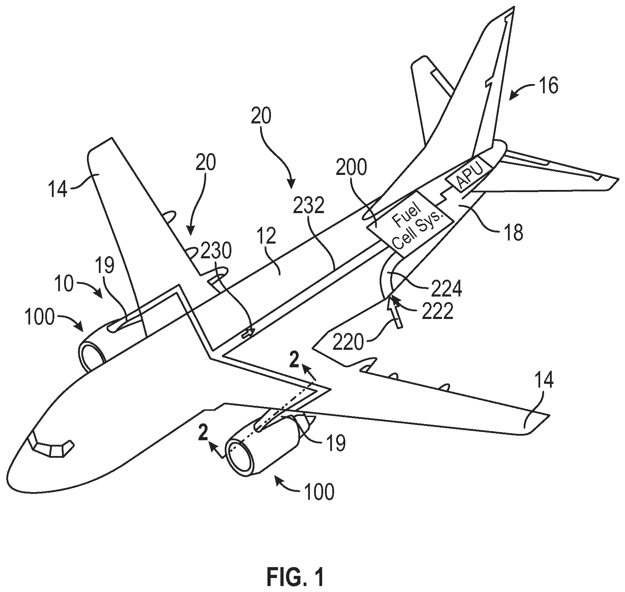

FIG. 1 is a perspective view of an aircraft 10 that can implement various embodiments of the propulsion and electrical systems discussed herein. The aircraft 10 shown in FIG. 1 is an airplane and includes a fuselage 12, wings 14 attached to the fuselage 12, and an empennage 16. The empennage 16 may be connected to a tail section 18 of the fuselage 12. Although the aircraft 10 shown in FIG. 1 is an airplane, the embodiments described herein can also be applicable to other aircraft, including, for example, helicopters and unmanned aerial vehicles (UAV).

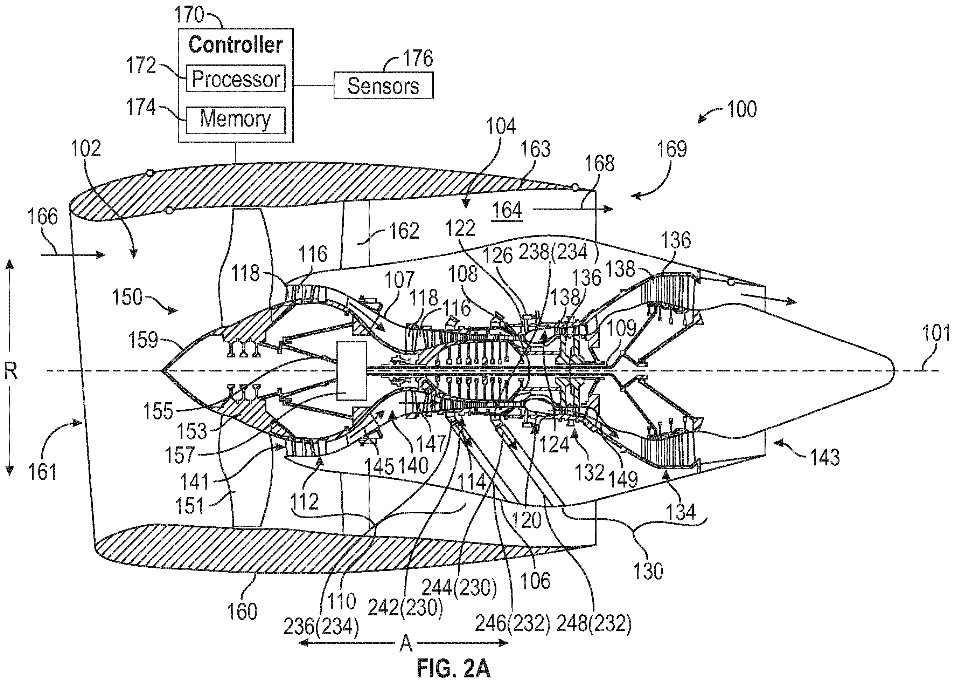

The aircraft 10 also includes a propulsion system that produces a propulsive thrust required to propel the aircraft 10 in flight, during taxiing operations, and the like. The propulsion system for the aircraft 10 shown in FIG. 1 includes a pair of turbine engines 100. In this embodiment, each turbine engine 100 is attached to one of the wings 14 by a pylon 19 in an under-wing configuration. Although the turbine engines 100 are shown attached to the wing 14 in an under-wing configuration in FIG. 1, in other embodiments, the turbine engine 100 can have alternative configurations and be coupled to other portions of the aircraft 10. For example, the turbine engine 100 can additionally or alternatively include one or more aspects coupled to other parts of the aircraft 10, such as, for example, the fuselage 12. As will be described further below with reference to FIG. 2A, the turbine engines 100 shown in FIG. 1 are gas turbine engines that are each capable of selectively generating a propulsive thrust for the aircraft 10.

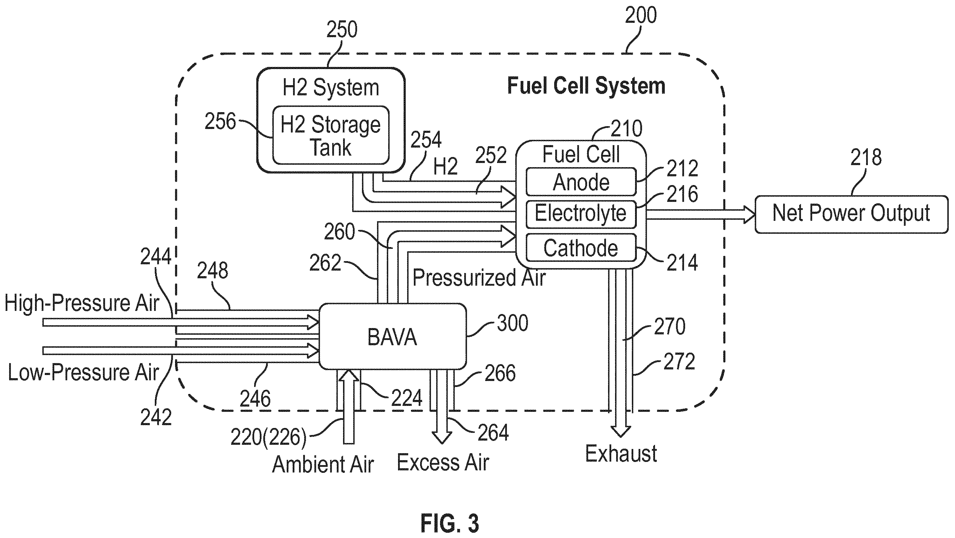

The turbine engines 100 form part of a propulsion and electrical system 20 for the aircraft 10. The propulsion and electrical system 20 also includes a fuel cell system 200. The fuel cell system 200 is schematically shown in FIG. 1 as being located in the fuselage 12 and, more specifically, within the tail section 18 of the aircraft 10. As will be discussed further below, however, the fuel cell system 200 and components thereof can be located elsewhere in the aircraft, such as within the turbine engines 100 or within the pylons 19. As discussed above, the fuel cell system 200 includes a fuel cell 210 (FIG. 3) that produces electricity when receiving hydrogen and oxygen. In embodiments discussed herein, the oxygen can be provided to the fuel cell 210 in the form of air, such as ambient air 220 drawn from the environment around the aircraft 10. In the embodiment depicted in FIG. 1, the aircraft 10 and, more specifically, the fuselage 12 includes an ambient air inlet 222. The ambient air 220 is drawn or otherwise directed, such as by movement of the aircraft 10 through the air, into the ambient air inlet 222 and flows through an ambient air flow path 224 to the fuel cell system 200. Additionally, or alternatively, the fuel cell system 200 is fluidly connected to one or more of the turbine engines 100 to receive air, such as compressed air 147 (FIG. 2A), from the turbine engines 100 as will be discussed in more detail below. The fuel cell system 200 can be directly fluidly connected to the turbine engines 100 to receive the air via one or more dedicated air flow passages, such as a duct. In some embodiments discussed further below, the air from the turbine engines 100 can be a portion of the compressed air 147 (FIG. 2A) referred to herein as bleed air 230. In such embodiments, the dedicated air flow passages for the bleed air 230 connecting the turbine engine 100 with the fuel cell system 200 can be referred to herein as a bleed air flow path 232.

FIG. 2A is a schematic, cross-sectional view of one of the turbine engines 100 used in the propulsion system for the aircraft 10 shown in FIG. 1. The cross-sectional view of FIG. 2A is taken along line 2-2 in FIG. 1. The turbine engine 100 has an axial direction A (extending parallel to a longitudinal centerline axis 101, shown for reference in FIG. 2A), a radial direction R, and a circumferential direction. The circumferential direction (not depicted in FIG. 2A) extends in a direction rotating about the longitudinal centerline axis 101 (the axial direction A). In the embodiment depicted in FIG. 2A, the turbine engine 100 is a high bypass turbofan engine, including a fan section 102 and a turbo-engine 104 disposed downstream from the fan section 102.

The turbo-engine 104 depicted in FIG. 1 includes, in serial flow relationship, a compressor section 110, a combustion section 120, and a turbine section 130. The turbo-engine 104 is substantially enclosed within an outer casing 106 (also referred to as a housing or a nacelle) that is substantially tubular and defines a core inlet 141. In this embodiment, the core inlet 141 is annular. As schematically shown in FIG. 1, the compressor section 110 includes a booster or a low-pressure (LP) compressor 112 followed downstream by a high-pressure (HP) compressor 114. The combustion section 120 is downstream of the compressor section 110. The turbine section 130 is downstream of the combustion section 120 and includes a high-pressure (HP) turbine 132 followed downstream by a low-pressure (LP) turbine 134. The turbo-engine 104 further includes a core air exhaust nozzle 143 (also referred to as a jet exhaust nozzle) that is downstream of the turbine section 130. The compressor section 110, the combustion section 120, and the turbine section 130 together define, at least in part, a core air flow path 140 extending from the core inlet 141 to the core air exhaust nozzle 143, and through which core air 145 flows. As will be discussed in more detail below, the turbo-engine 104 includes shafts, also referred to as engine shafts, coupling various rotating components of the turbo-engine 104 and other thrust producing components, such as the fan 150 (discussed below). In the turbo-engine 104 shown in FIG. 2A, these engine shafts include a high-pressure (HP) shaft 108, and a low-pressure (LP) shaft 109. The HP shaft 108 drivingly connects the HP turbine 132 to the HP compressor 114. The HP turbine 132 and the HP compressor 114 rotate in unison through the HP shaft 108. The LP shaft 109 drivingly connects the LP turbine 134 to the LP compressor 112. The LP turbine 134 and the LP compressor 112 rotate in unison through the LP shaft 109.

Each of the LP compressor 112 and the HP compressor 114 can include a plurality of compressor stages. In each stage, a set of compressor blades 116 rotates relative to a corresponding set of static compressor vanes 118 (also called nozzles) to compress or to pressurize the core air 145 passing through the stage. In a single compressor stage, a plurality of compressor blades 116 can be provided in a ring, extending radially outwardly relative to the longitudinal centerline axis 101 from a blade platform to a blade tip (e.g., extend in the radial direction R). The compressor blades 116 can be a part of a compressor rotor that includes a disk and the plurality of compressor blades 116 extend radially from the disk. Other configurations of the compressor rotor can be used, including, for example, blisks where the disk and the compressor blades 116 are integrally formed with each other to be a single piece. Other configurations of compressors also can include centrifugal compressors where the compressor blades are arranged circumferentially in manner to direct the flow of air radially to compress the air and generate compressed air. The corresponding static compressor vanes 118 are positioned upstream of and adjacent to the rotating compressor blades 116. The compressor vanes 118 for a stage of the compressor can be mounted to a core casing 107 in a circumferential arrangement. The core casing can define, at least in part, the core air flow path 140. Each compressor stage can be used to sequentially compress the core air 145 flowing through the core air flow path 140, generating compressed air 147. Any suitable number of compressor blades 116, compressor vanes 118, and compressor stages can be used.

Each of the HP turbine 132 and the LP turbine 134 also can include a plurality of turbine stages. In each stage, a set of turbine blades 136 rotates relative to a corresponding set of static turbine vanes 138 (also called nozzles) to extract energy from combustion gases 149 passing through the stage. The turbine blades 136 can be a part of a turbine rotor. Any suitable configuration for a turbine rotor can be used, including, for example, a disk with the plurality of turbine blades 136 extending from the disk. The corresponding static turbine vanes 138 are positioned upstream of and adjacent to the rotating turbine blades 136. The turbine vanes 138 for a stage of the turbine can be mounted to the core casing 107 in a circumferential arrangement.

In the combustion section 120, fuel, received from a fuel system, is injected into a combustion chamber 124 of a combustor 122 by fuel nozzles 126. The fuel is mixed with the compressed air 147 from the compressor section 110 to form a fuel and air mixture, and combusted, generating combustion products (combustion gases 149). As will be discussed further below, adjusting a fuel metering unit (not shown) of the fuel system changes the volume of fuel provided to the combustion chamber 124 and, thus, changes the amount of propulsive thrust produced by the turbine engine 100 to propel the aircraft 10. The combustion gases are discharged from the combustion chamber 124. These combustion gases can be directed into the turbine blades 136 of the HP turbine 132 and, then, the turbine blades 136 of the LP turbine 134, and the combustion gases 149 drive (rotate) the turbine blades 136 of the HP turbine 132 and the LP turbine 134. Any suitable number of turbine blades 136, turbine vanes 138, and turbine stages can be used. After flowing through the turbine section 130, the combustion gases 149 are exhausted from the turbine engine 100 through the core air exhaust nozzle 143 to provide propulsive thrust.

The turbine engine 100 and, more specifically, the turbo-engine 104 further includes one or more drive shafts. As noted above, the turbo-engine 104 includes the high-pressure (HP) shaft 108 drivingly connecting the HP turbine 132 to the HP compressor 114, and the low-pressure (LP) shaft 109 drivingly connecting the LP turbine 134 to the LP compressor 112. More specifically, the turbine rotors of the HP turbine 132 are connected to the HP shaft 108, and the compressor rotors of the HP compressor 114 are connected to the HP shaft 108. The combustion gases 149 are routed into the HP turbine 132 and expanded through the HP turbine 132 where a portion of thermal energy or kinetic energy from the combustion gases 149 is extracted via the one or more stages of the turbine blades 136 and turbine vanes 138 of the HP turbine 132. This causes the HP shaft 108 to rotate, which supports operation of the HP compressor 114 (self-sustaining cycle) and rotating the compressor rotors and, thus, the compressor blades 116 of the HP compressor 114 via the HP shaft 108. In this way, the combustion gases 149 do work on the HP turbine 132. The combustion gases 149 are then routed into the LP turbine 134 and expanded through the LP turbine 134. Here, a second portion of the thermal energy or the kinetic energy is extracted from the combustion gases 149 via one or more stages of the turbine blades 136 and turbine vanes 138 of the 134. This causes the LP shaft 109 to rotate, which supports operation of the LP compressor 112 (self-sustaining cycle), and rotating the compressor rotors and, thus, the compressor blades 116 of the LP compressor 112 via the LP shaft 109. In this way, the combustion gases 149 do work on the LP turbine 134. The HP shaft 108 and the LP shaft 109 are disposed coaxially about the longitudinal centerline axis 101. The HP shaft 108 has a diameter greater than that of the LP shaft 109, and the HP shaft 108 is located radially outward of the LP shaft 109. The HP shaft 108 and the LP shaft 109 are rotatable about the longitudinal centerline axis 101 and, as discussed above, coupled to rotatable elements such as the compressor rotors and the turbine rotors.

The fan section 102 shown in FIG. 2A includes a fan 150 having a plurality of fan blades 151 coupled to a disk 153. The fan blades 151 and the disk 153 are rotatable, together, about the longitudinal centerline axis 101 by a fan shaft 155. In the embodiment depicted in FIG. 2A, the turbine engine 100 is a geared turbine engine and the fan shaft 155 is powered by the LP shaft 109 across a power gearbox, also referred to as a gearbox assembly 157. In this way, the fan 150 is drivingly coupled to, and powered by, the turbo-engine 104, and the turbine engine 100 is an indirect drive engine. The gearbox assembly 157 is shown schematically in FIG. 1. The gearbox assembly 157 is a reduction gearbox assembly for adjusting the rotational speed of the fan shaft 155 and, thus, the fan 150 relative to the LP shaft 109 when power is transferred from the LP shaft 109 to the fan shaft 155. The LP compressor 112 can also be driven by the LP shaft 109 and, as depicted in FIG. 2A, the LP compressor 112 can be driven by the fan shaft 155. Although the turbine engine 100 is shown as an indirect drive turbofan engine, in other embodiments, the turbine engine 100 can be a direct drive turbine engine where the LP shaft 109 is directly connected to the fan shaft 155 (or integrally formed therewith) without the gearbox assembly 157 located therebetween.

The disk 153 is covered by a rotatable front hub 159 aerodynamically contoured to promote an airflow through the plurality of fan blades 151. Further, a nacelle 160 circumferentially surrounds the fan 150 and/or at least a portion of the turbo-engine 104. The nacelle 160 can also be referred to as an annular fan casing or an outer nacelle. The nacelle 160 is supported relative to the turbo-engine 104 and, more specifically, the outer casing 106 by a plurality of outlet guide vanes 162 that are circumferentially spaced about the nacelle 160 and the turbo-engine 104. A downstream section 163 of the nacelle 160 extends over an outer portion of the turbo-engine 104 and, more specifically, the outer casing 106 to define a bypass airflow passage 164 therebetween.

During operation of the turbine engine 100, a volume of air 166 enters the turbine engine 100 through an inlet of the nacelle 160 and/or the fan section 102 (referred to herein as an engine inlet 161). As the volume of air 166 passes across the fan blades 151, a first portion of air (bypass air 168) is directed or routed into the bypass airflow passage 164, and a second portion of air (core air 145) is directed or is routed into an upstream section of the core air flow path 140, or, more specifically, into the core inlet 141. The ratio between the bypass air 168 and the core air 145 is commonly known as a bypass ratio. Simultaneously with the flow of the core air 145 through the core air flow path 140 (as discussed above), the bypass air 168 is routed through the bypass airflow passage 164 before being exhausted from a bypass air discharge nozzle 169 of the turbine engine 100, also providing propulsive thrust. The bypass air discharge nozzle 169 and the core air exhaust nozzle 143 are air exhaust nozzles of the turbine engine 100.

The turbine engine 100 can also include a controller which is referred to herein as an engine controller 170. In FIG. 2A, the engine controller 170 is depicted as an engine controller, such as a Full Authority Digital Engine Control (FADEC). The engine controller 170 is configured to operate various aspects of the turbine engine 100, including fuel cell system 200, discussed herein. In this embodiment, the engine controller 170 is a computing device having one or more processors 172 and one or more memories 174. The processor 172 can be any suitable processing device, including, but not limited to, a microprocessor, a microcontroller, an integrated circuit, a logic device, a programmable logic controller (PLC), an application-specific integrated circuit (ASIC), and/or a Field Programmable Gate Array (FPGA). The memory 174 can include one or more computer-readable media, including, but not limited to, non-transitory computer-readable media, a computer-readable non-volatile medium (e.g., a flash memory), a RAM, a ROM, hard drives, flash drives, and/or other memory devices.

The memory 174 can store information accessible by the processor 172, including computer-readable instructions that can be executed by the processor 172. The instructions can be any set of instructions or a sequence of instructions that, when executed by the processor 172, causes the processor 172 and the engine controller 170 to perform operations. In some embodiments, the instructions can be executed by the processor 172 to cause the processor 172 to complete any of the operations and functions for which the engine controller 170 is configured, as will be described further below. The instructions can be software written in any suitable programming language, or can be implemented in hardware. Additionally, and/or alternatively, the instructions can be executed in logically and/or virtually separate threads on the processor 172. The memory 174 can further store data that can be accessed by the processor 172.

The technology discussed herein makes reference to computer-based systems and actions taken by, and information sent to and from, computer-based systems. One of ordinary skill in the art will recognize that the inherent flexibility of computer-based systems allows for a great variety of possible configurations, combinations, and divisions of tasks and functionality between components and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

As will be discussed in more detail below, the engine controller 170 can be coupled to one or more sensors 176, such as a plurality of sensors. Such sensors 176 can be, for example, pressure sensors. The sensors 176 can be positioned at various suitable locations within the fuel cell system 200, the turbine engine 100, or the aircraft 10.

The turbine engine 100 shown in FIG. 2A and discussed herein (turbofan engine) is provided by way of example only. In other embodiments, any other suitable engine can be utilized with aspects of the present disclosure. For example, in other embodiments, the engine can be any other suitable gas turbine engine, such as a turboshaft engine, a turboprop engine, a turbojet engine, an unducted single fan engine, a hybrid electric propulsion system, and the like. In such a manner, in other embodiments, the gas turbine engine can have other suitable configurations, such as other suitable numbers or arrangements of shafts, compressors, turbines, fans, etc. For example, when used in a turboprop engine, a plurality of propeller blades coupled to a propeller shaft may be driven by the turbo-engine 104 in a manner similar to the fan 150 and, more specifically, the fan shaft 155 as discussed herein. Further, although the turbine engine 100 is shown as a fixed-pitch turbofan engine, in other embodiments, the turbine engine 100 can be a variable pitch turbine engine (i.e., including a fan 150 having a plurality of fan blades 151 rotatable about their respective pitch axes), etc. Further, although the turbine engine 100 shows the fan 150 and the fan shaft 155, in other embodiments, the turbine engine 100 is a turboshaft engine, where the LP turbine shaft interfaces with the aircraft rotor system with or without a reduction gearbox 157. Further, still, in alternative embodiments, aspects of the present disclosure can be incorporated into, or otherwise utilized with, any other type of engine, such as reciprocating engines.

As noted above, the fuel cell system 200 (FIG. 1) can be directly fluidly connected to the turbine engine 100 to receive the air containing oxygen. The air provided to the fuel cell system 200 from the turbine engine 100 can be various air sources within the turbine engine 100 including air that has been compressed or otherwise pressurized by the turbine engine 100, such as by the fan 150, the LP compressor 112, or the HP compressor 114. For the fuel cell 210 (FIG. 3) to produce electricity, the air provided to the fuel cell 210 can be oxygen rich air drawn from an air source upstream of the combustion section 120. The bleed air 230 can be a portion of the compressed air 147 drawn from one of the compressors (i.e., the LP compressor 112 or the HP compressor 114) of the compressor section 110. In the embodiment depicted in FIG. 2A, the bleed air 230 is drawn from the HP compressor 114. One or more bleed air ports 234 are positioned in the HP compressor 114 or downstream thereof to draw a portion of the compressed air 147 as the bleed air 230. As discussed above, the compressor includes a plurality of stages progressively compressing an input air flowing therethrough air (i.e., the core air 145 in this embodiment) to generate the compressed air 147. The positioning of the bleed air port 234 determines the pressure of the bleed air 230 as each subsequent stage has a higher pressure than that of the preceding stages.

In the depicted embodiment of FIG. 2A, and as will be discussed further below, the bleed air 230 provided to the fuel cell 210 includes low-pressure bleed air 242 and high-pressure bleed air 244. The low-pressure bleed air 242 is drawn from a lower-pressure stage of the HP compressor 114 and the high-pressure bleed air 244 is drawn from a higher-pressure stage of the HP compressor 114. The low-pressure bleed air 242 is drawn from a low-pressure bleed air port 236, and the high-pressure bleed air 244 is drawn from a high-pressure bleed air port 238. The lower-pressure stage is upstream of the higher-pressure stage relative to the flow of the core air 145, and the low-pressure bleed air port 236 is upstream of the of the high-pressure bleed air port 238. The low-pressure bleed air port 236 is directly fluidly connected to the fuel cell system 200 by a low-pressure bleed air flow path 246. Similarly, the high-pressure bleed air port 238 is directly fluidly connected to the fuel cell system 200 by a high-pressure bleed air flow path 248.

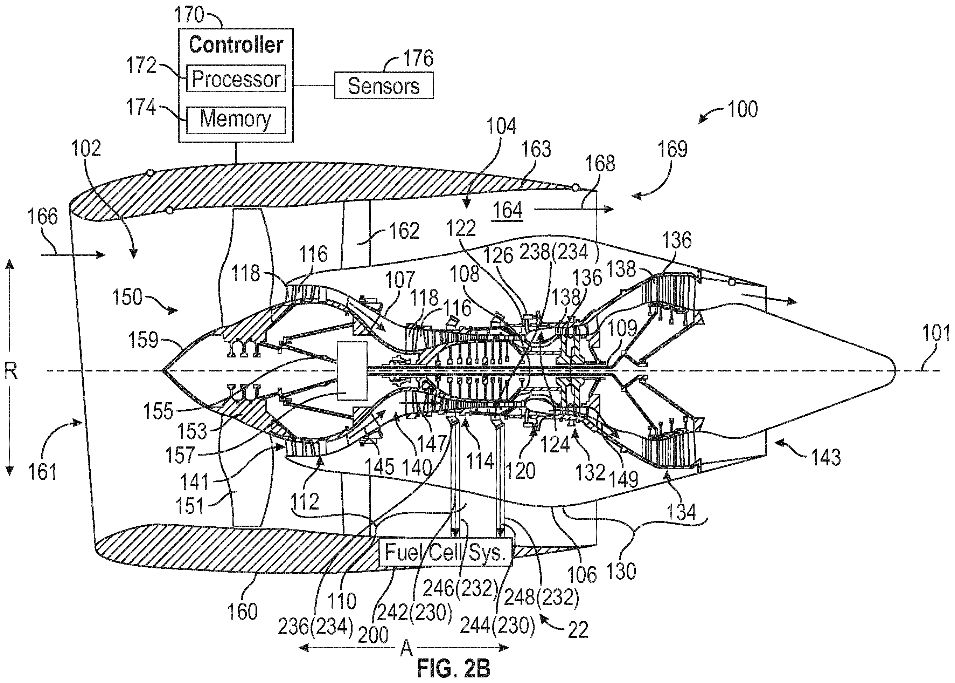

FIGS. 2B to 2D are a schematic, cross-sectional views, of a turbine engine, taken from a perspective similar to that of FIG. 2A, showing variations of the propulsion and electrical system. The features of the propulsion and electrical system shown in FIGS. 2B to 2D are similar to the propulsion and electrical system 20 discussed above with reference to FIGS. 1 and 2A. The same reference numerals are used for the same or similar components. The discussion above of these features and components applies to the propulsion and electrical system shown in FIGS. 2B to 2D and a detailed discussion is omitted here.

As noted above, the fuel cell system 200 can be located at different locations in the aircraft 10, and FIG. 2B shows a propulsion and electrical system 22 with the fuel cell system 200, or components thereof, as part of the turbine engine 100. As schematically depicted in FIG. 2B, the fuel cell system 200 can be located within a housing for the turbine engine 100, such as, for example, within the nacelle 160. Other housings include, for example, the outer casing 106 enclosing the turbo-engine 104.

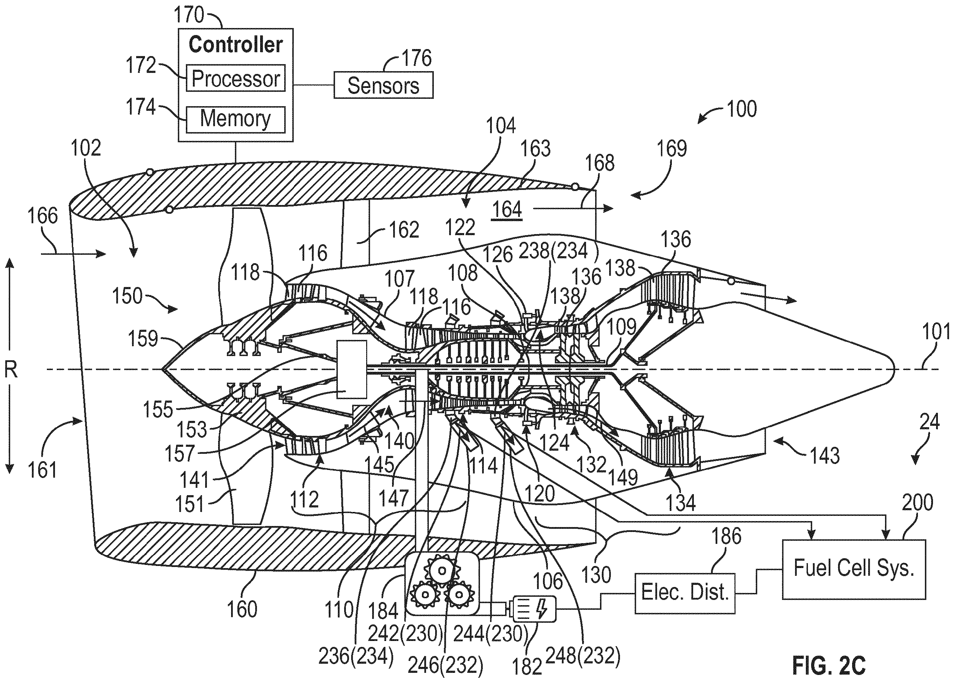

FIG. 2C shows another propulsion and electrical system 24. As noted above, the fuel cell system 200 can be used to provide electrical power to various systems and can be used to provide power to the turbine engine 100. In the propulsion and electrical system 24 depicted in FIG. 2C, the propulsion and electrical system 24 includes an electrical motor 182 that can be used to operate portions of the turbine engine 100. In the embodiment depicted in FIG. 2C, for example, the electrical motor 182 is drivingly coupled an engine shaft of the turbine engine 100 and, more specifically, in FIG. 2C, the HP shaft 108. In FIG. 2C, the electrical motor 182 is coupled to the engine shaft and, more specifically, the HP shaft 108, via an accessory gear box 184. The fuel cell system 200 and, more specifically, the fuel cell 210 (FIG. 3), provides power to the electrical motor 182 via an electrical distribution system 186. The electrical motor 182 can be used to provide power input to the HP shaft 108 (i.e., the engine shaft) and to improve the compressor operability margin. Alternatively, the electrical motor 182 can be connected to the LP shaft 109 to provide power to the LP shaft 109 such as via the gearbox assembly 157. The electrical motor 182 in this configuration can be used to introduce power to the compressors (i.e., the LP compressor 112 or the HP compressor 114) of the compressor section 110 without the need to increase the fuel flow. Such an implementation may be particularly useful during lower power or low thrust conditions of the flight cycle, such as, for example, ground operations, descent, and idle operations. Further, such a use may be useful for high altitude flight conditions providing flexibility for the operation of the compressors 110.

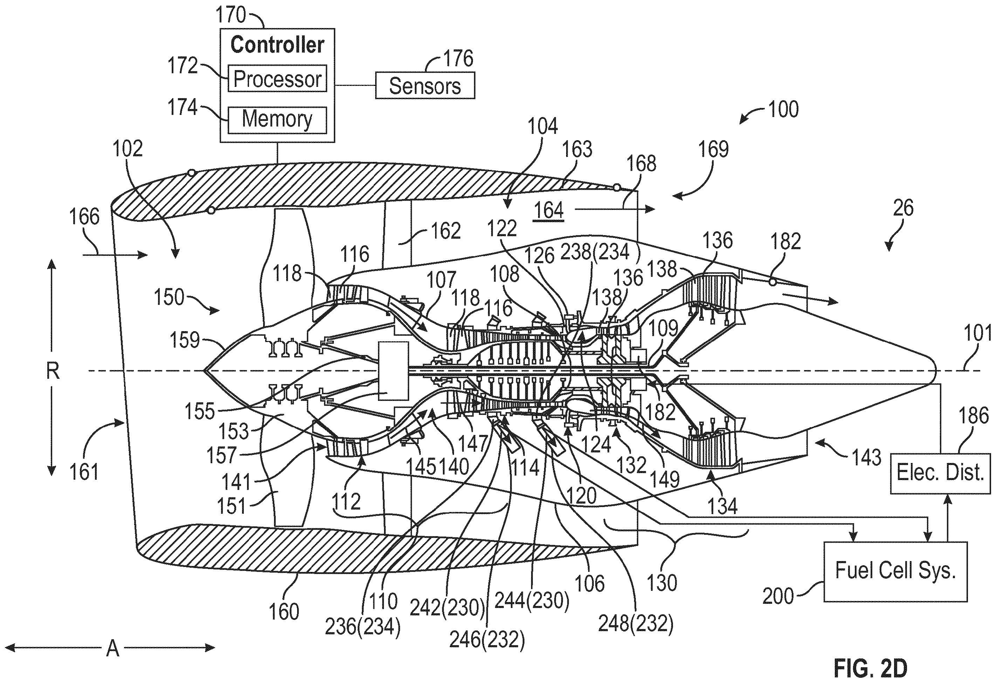

FIG. 2D shows another propulsion and electrical system 26. In FIG. 2C, the electrical motor 182 is drivingly coupled the engine shaft via an accessory gear box 184. The electrical motor 182 can be drivingly coupled to the engine shaft in other ways. As depicted in FIG. 2D, for example, the electrical motor 182 is directly coupled to the engine shaft, such as the HP shaft 108.

FIG. 3 is a schematic view of the fuel cell system 200 that can be used in any one of the propulsion and electrical systems 20, 22, 24, and 26, discussed above. As noted above, the fuel cell system 200 includes a fuel cell 210. The fuel cell 210 can be, more specifically, a fuel cell stack or a fuel cell module assembly, comprising a plurality of individual cells. Each individual cell of the fuel cell 210 includes an anode 212 and a cathode 214, separated by an electrolyte 216. A fuel, such as a hydrogen fuel 252, is fed to the anode 212. In some embodiments, the hydrogen fuel 252 may be substantially pure hydrogen molecules (i.e., diatomic hydrogen). The hydrogen fuel 252 may be provided to the fuel cell 210 by a hydrogen fuel delivery assembly 254. The hydrogen fuel delivery assembly 254 includes one or more lines, conduits, pipes, tubes, etc., configured to carry the hydrogen fuel 252 to the fuel cell 210 from a hydrogen source, such as a hydrogen storage tank 256. The hydrogen fuel 252 may be stored in the hydrogen storage tank 256 in various forms, such as in a gaseous state or in a liquid state. The hydrogen fuel 252 can be located at various locations on board the aircraft 10 and configured to hold hydrogen (i.e., the hydrogen fuel 252). The hydrogen storage tank 256 can be, for example, within the fuselage 12 or the wings 14. The hydrogen fuel delivery assembly 254 and the hydrogen storage tank 256 can be part of a hydrogen fuel system 250.

The hydrogen fuel system 250 can include additional systems and components to store the hydrogen fuel 252 in the desired state and to deliver the hydrogen fuel 252 to the fuel cell 210 via the hydrogen fuel delivery assembly 254. For example, a pump can be positioned in the hydrogen fuel delivery assembly 254 to pressurize the hydrogen fuel 252 such that the hydrogen fuel 252 flows through the hydrogen fuel delivery assembly 254 to the fuel cell 210. In some embodiments, the hydrogen fuel 252 is stored in the hydrogen storage tank 256 as liquid hydrogen fuel 252, and, in such embodiments, the hydrogen fuel system 250 may also include one or more vaporizers in fluid communication with the hydrogen fuel delivery assembly 254. The one or more vaporizers heat the liquid hydrogen fuel 252 flowing through the hydrogen fuel delivery assembly 254. The one or more vaporizers are positioned in the flow path of the hydrogen fuel 252 between the hydrogen storage tank 256 and the fuel cell 210, and can be located downstream of the pump. The one or more vaporizers are in thermal communication with at least one heat source, such as, for example, waste heat from the turbine engine 100 and/or from one or more systems of the aircraft (not shown). The one or more vaporizers heat the liquid hydrogen fuel 252 and the liquid hydrogen fuel 252 is converted into a gaseous hydrogen fuel 252 within the one or more vaporizers. The hydrogen fuel delivery assembly 254 then directs the gaseous hydrogen fuel 252 into the fuel cell 210. The hydrogen fuel system 250 can also include various valves and other systems, such valves can include, for example, a metering valve in fluid communication with the hydrogen fuel delivery assembly 254 to regulate the flow of the hydrogen fuel 252 to the fuel cell 210. The metering valve can be positioned downstream of the vaporizers.

Oxygen is fed to the cathode 214 from an oxygen source. The oxygen can be oxygen that is within air. The air can be fed to the fuel cell 210 from a suitable air source (e.g., an oxygen source) to provide the oxygen to the cathode 214 of the fuel cell 210. The air containing oxygen is fed to the fuel cell 210 as pressurized air 260 via a pressurized air flow path 262, such as a duct. In embodiments discussed herein, the pressurized air 260 can be generated from bleed air 230 (FIG. 3A), ambient air 220, or combinations thereof. As noted above, the bleed air 230 can be low-pressure bleed air 242 and high-pressure bleed air 244, and, thus, the pressurized air 260 can be low-pressure bleed air 242, high-pressure bleed air 244, ambient air 220, or combinations thereof. In the fuel cell system 200 depicted in FIG. 3, each of these air sources is fluidly connected to a bleed air valve assembly 300 to receive the bleed air 230, more specifically, the low-pressure bleed air 242, the high-pressure bleed air 244, and the ambient air 220.

The bleed air valve assembly 300 is fluidly connected a compressor, such as the HP compressor 114 (FIG. 2A), as a bleed air source, via the bleed air flow path 232 (FIG. 2A). More specifically, the bleed air valve assembly 300 is fluidly connected to the HP compressor 114 via the low-pressure bleed air flow path 246 and the high-pressure bleed air flow path 248. Optionally, as in the depicted embodiment, the bleed air valve assembly 300 is also fluidly connected to an ambient air source 226, such as the exterior of the aircraft 10 in, for example, the manner discussed above. More specifically, the bleed air valve assembly 300 is fluidly connected to the ambient air source 226 via the ambient air flow path 224 to receive the ambient air 220. The bleed air valve assembly 300 is positionable, as will be discussed in more detail below, to regulate the bleed air 230 (FIG. 2A), the ambient air 220, or combinations thereof, to generate the pressurized air 260 containing oxygen. The bleed air valve assembly 300 can be fluidly coupled to the ambient air inlet 222 and the ambient air flow path 224 to selectively receive ambient air 220. More specifically, in some embodiments, the bleed air valve assembly 300 is positionable to regulate the low-pressure bleed air 242, the high-pressure bleed air 244, the ambient air 220, or combinations thereof, to generate the pressurized air 260 containing oxygen. The fuel cell 210 is fluidly connected to the bleed air valve assembly 300 via the pressurized air flow path 262 to receive the pressurized air 260.

When regulating the air provided to the bleed air valve assembly 300, such as the bleed air 230 (FIG. 2A), including the low-pressure bleed air 242 and the high-pressure bleed air 244, the ambient air 220, or combinations thereof, the bleed air valve assembly 300 can generate excess air 264. The excess air 264 can be removed from the fuel cell system 200 via an excess air flow path 266 fluidly connected to the bleed air valve assembly 300.

Within each cell of the fuel cell 210, the anode 212 can include a catalyst that separates hydrogen molecules into protons and electrons, which take different paths to the cathode 214. The electrons go through an external circuit, creating a flow of electricity, which is output from the fuel cell 210 as a net power output 218. The fuel cell 210 can be electrically coupled to the electrical distribution system 186 (FIG. 2C), for example, to provide power to the aircraft 10 including the turbine engine 100, as discussed above. The protons migrate through the electrolyte 216 to the cathode 214, where they unite with the oxygen and the electrons to produce water. The produced water is exhausted with other exhaust products from the fuel cell 210 as exhaust 270 through an exhaust flow path 272.

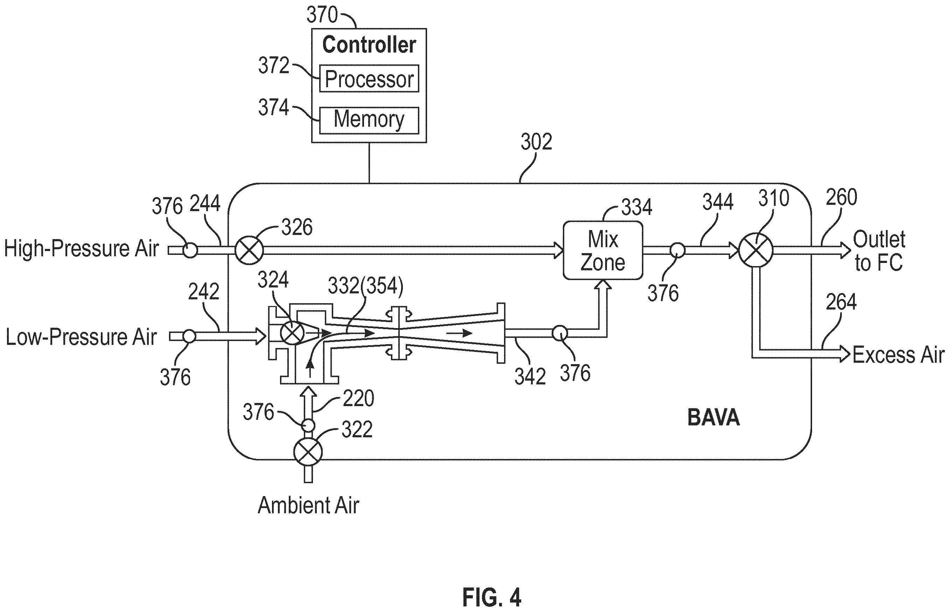

FIGS. 4 to 6 are schematic views of bleed air valve assemblies that can be used as the bleed air valve assembly 300 of the fuel cell system 200 shown in FIG. 3. In the following discussion, the same reference numerals will be used for the same or similar components among these embodiments and the description in one embodiment applies to the other embodiments, unless otherwise explicitly noted. The following discussion will also refer to the low-pressure bleed air 242 and the high-pressure bleed air 244. In some embodiments, however, only one bleed air stream (e.g., bleed air 230 shown in FIG. 2A) can be used to generate the pressurized air 260, and the discussion of the low-pressure bleed air 242 applies to such cases. Additionally, in other embodiments, the ambient air 220 can be omitted and only the bleed air 230, such as the low-pressure bleed air 242, the high-pressure bleed air 244, or combinations thereof, can be used to generate the pressurized air 260.

The bleed air valve assemblies discussed further below include components, such as valves, mixing chambers, ejectors, and the like, that are fluidly connected to each other. These components may be fluidly connected to each other by air flow paths that are ducts, lines, conduits, pipes, tubes, and the like. The following discussion also makes reference to diverter valves to direct the flow of air through the bleed air valve assemblies, but the air may be directed using other suitable valving arrangements such as two or more two-way valves that are positionable to open and to close different flow paths. In the applications where diverter valves are discussed below, these applications may be implemented by one or more valves. The bleed air valve assemblies discussed further below are positionable to direct and to regulate the flow of air through the bleed air valve assemblies in various ways. The bleed air valve assemblies are positionable by positioning one or more of the valves discussed below. The valves discussed below can have a closed position to prevent air from flowing therethrough or an open position to allow the air to flow therethrough. The valves are positionable in the open position and the closed position, and can be positioned in the open position and the closed position. In some embodiments, the valves discussed below can be a flow control valve. In such cases, the flow control valve can have a closed position and a plurality of open positions to allow a desired amount of the air to flow therethrough, controlling or regulating the flow of air through the valve by the open position. The flow control valve is positionable in a plurality of open positions and can be positioned in each position of the plurality of open positions.

FIG. 4 is a schematic view of a bleed air valve assembly 302 according to an embodiment that can be used as the bleed air valve assembly 300 of the fuel cell system 200 shown in FIG. 3. The bleed air valve assembly 302 can include a throttle valve 310. The throttle valve 310 can be fluidly connected to one or more of the low-pressure bleed air 242, the high-pressure bleed air 244, or the ambient air 220 to receive each air flow individually or to receive mixtures thereof. The throttle valve 310 can be positioned to regulate the air received and output the desired amount of pressurized air 260 at a desired flow rate. The throttle valve 310 can be a flow control valve. The throttle valve 310 can also be a pressure reducing valve adjustable to reduce the pressure of the air being provided to the throttle valve 310 to regulate the pressure of the pressurized air 260. Additionally, or alternatively, the throttle valve 310 can be a diverter valve. When the air being received by the throttle valve 310 includes more air than is desired to be provided to the fuel cell 210, the throttle valve 310 can direct a first portion of the received air to the fuel cell 210 as the pressurized air 260 and divert a second portion (e.g., the remaining portion) of the received air as the excess air 264.

The bleed air valve assembly 302 shown in FIG. 4 includes an ambient air valve 322. The ambient air valve 322 is positioned in the flow path of the ambient air 220 and can be opened to allow the flow of the ambient air 220 into the bleed air valve assembly 302 or closed to prevent the flow of the ambient air 220 into the bleed air valve assembly 302. In some conditions, the ambient air 220 may be at a sufficient pressure for the desired power output of the fuel cell 210, and the ambient air valve 322 can be opened to allow the ambient air 220 to flow into the bleed air valve assembly 302, to the throttle valve 310, and then to the fuel cell 210 as the pressurized air 260. Such conditions may exist when the aircraft 10 is moving through the air. **In** some embodiments, however, the pressure of the ambient air 220 is not sufficient for the desired operation of the fuel cell 210, and, in such cases, another air source, such as the low-pressure bleed air 242 or the high-pressure bleed air 244 can be used, either alone or in mixtures, to generate the pressurized air 260.

The bleed air valve assembly 302 can include a low-pressure bleed air valve 324 positioned in the flow path of the low-pressure bleed air 242 to control the flow of the low-pressure bleed air 242. The low-pressure bleed air valve 324 can be opened to allow the flow of the low-pressure bleed air 242 into the bleed air valve assembly 302 or closed to prevent the flow of the low-pressure bleed air 242 into the bleed air valve assembly 302. In some conditions, the low-pressure bleed air 242 may be at a sufficient pressure and volumetric flow rate for the desired power output of the fuel cell 210, and the low-pressure bleed air valve 324 can be opened to allow the low-pressure bleed air 242 to flow into the bleed air valve assembly 302, to the throttle valve 310, and then to the fuel cell 210 as the pressurized air 260.

In some conditions, a mixture of the ambient air 220 and the low-pressure bleed air 242 can be provided to the throttle valve 310 to generate the pressurized air 260. In such conditions, the ambient air valve 322 and the low-pressure bleed air valve 324 are opened, and the ambient air 220 and the low-pressure bleed air 242 are directed to a first mixing chamber 332 or mixing zone, where the ambient air 220 and the low-pressure bleed air 242 are mixed to generate mixed air. For clarity with other air mixtures, the mixture of the ambient air 220 with the low-pressure bleed air 242 is referred to herein as low-pressure mixed air 342. The low-pressure mixed air 342 can then flow to the throttle valve 310 and then to the fuel cell 210 as the pressurized air 260.

In the embodiment depicted in FIG. 4, the first mixing chamber 332 is part of an ejector. For clarity with other ejectors discussed herein, this ejector is referred to as a low-pressure ejector 350. The low-pressure ejector 350 can include a nozzle 352, a mixing chamber 354, and a diffuser 356. Under certain conditions, the ambient air 220 may not be at sufficient pressure to flow into the bleed air valve assembly 302 at the desired volumetric flow rate. Such conditions may be, for example, when the aircraft 10 is at idle or taxiing on a runway. The low-pressure ejector 350 can be used to draw the ambient air 220 into the bleed air valve assembly 302. The low-pressure bleed air 242 is used as the motive fluid in the low-pressure ejector 350. The low-pressure bleed air valve 324 is opened to direct the low-pressure bleed air 242 through the nozzle 352, generating a low-pressure region within the low-pressure ejector 350. The ambient air 220 is fluidly connected to a suction of the low-pressure ejector 350 and, when the low-pressure bleed air 242 flows through the nozzle 352, generating the low pressure within the low-pressure ejector 350, the ambient air 220 is drawn into the low-pressure ejector 350 by the low-pressure region and mixed with the low-pressure bleed air 242 in the mixing chamber 354 of the low-pressure ejector 350 to generate the low-pressure mixed air 342. In this embodiment, the mixing chamber 354 of the low-pressure ejector 350 is the first mixing chamber 332.

The bleed air valve assembly 302 can include a high-pressure bleed air valve 326 positioned in the flow path of the high-pressure bleed air 244 to control the flow of the high-pressure bleed air 244. The high-pressure bleed air valve 326 can be opened to allow the flow of the high-pressure bleed air 244 into the bleed air valve assembly 302 or closed to prevent the flow of the high-pressure bleed air 244 into the bleed air valve assembly 302. In some conditions, the high-pressure bleed air 244 may be at a sufficient pressure and volumetric flow rate for the desired power output of the fuel cell 210, and the high-pressure bleed air valve 326 can be opened to allow the high-pressure bleed air 244 to flow into the bleed air valve assembly 302, to the throttle valve 310, and then to the fuel cell 210 as the pressurized air 260.

In some conditions, a mixture of the high-pressure bleed air 244 with the ambient air 220, the low-pressure bleed air 242, or the low-pressure mixed air 342 can be provided to the throttle valve 310 to generate the pressurized air 260. For example, the low-pressure mixed air 342 can be generated as discussed above and directed to a second mixing chamber 334 or mixing zone. The high-pressure bleed air valve 326 is opened and the high-pressure bleed air 244 is also directed to the second mixing chamber 334, where the high-pressure bleed air 244 is mixed with the high-pressure bleed air 244 to generate mixed air. For clarity with other air mixtures, air mixtures with the high-pressure bleed air 244 are referred to herein as high-pressure mixed air 344. The high-pressure mixed air 344 can then flow to the throttle valve 310, and then to the fuel cell 210 as the pressurized air 260. The high-pressure mixed air 344 can also be a mixture of the high-pressure bleed air 244 with one of the ambient air 220 or the low-pressure bleed air 242. In such cases, the ambient air valve 322 and the low-pressure bleed air valve 324 are positioned to direct one of the ambient air 220 or the low-pressure bleed air 242 to the second mixing chamber 334 to be mixed with the high-pressure bleed air 244 and to generate the high-pressure mixed air 344.

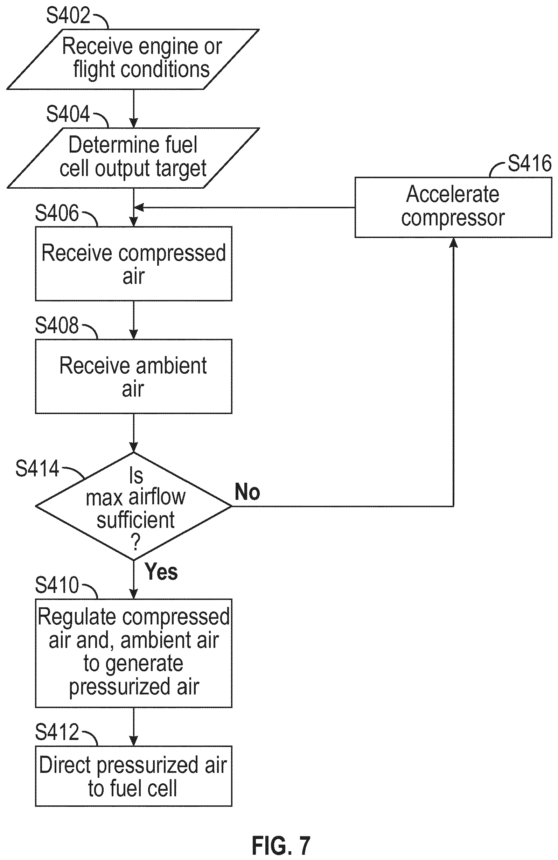

The bleed air valve assembly 302 can be controlled by a controller, which is referred to herein as bleed air valve controller 370. While discussed as standalone controller, the bleed air valve controller 370 or certain functions thereof can be implemented as part of other controllers on board the aircraft 10 or engine 100, such as the engine controller 170 discussed above. When the bleed air valve controller 370is a standalone controller, the bleed air valve controller 370 can be similar to the engine controller 170 discussed above with a processor 372, a memory, 374, and sensors 376. The discussion of the engine controller 170 above, thus also applies to the bleed air valve controller 370. The bleed air valve controller 370 can receive inputs from sensors 376, such as pressure sensors. These sensors 376 may be located in appropriate flow paths of the ambient air 220, the low-pressure bleed air 242, the high-pressure bleed air 244, the low-pressure mixed air 342, and the high-pressure mixed air 344 to determine characteristics of the air flowing therethrough and provide an input to the bleed air valve controller 370. Based on these inputs, the bleed air valve controller 370 can operate the bleed air valve assembly 302 to regulate the flow of the pressurized air 260 to the fuel cell 210. The bleed air valve controller 370 is operatively coupled to the bleed air valve assembly 302 and components therein to operate these components, such as, for example, in the manner discussed further below with reference to FIG. 7.

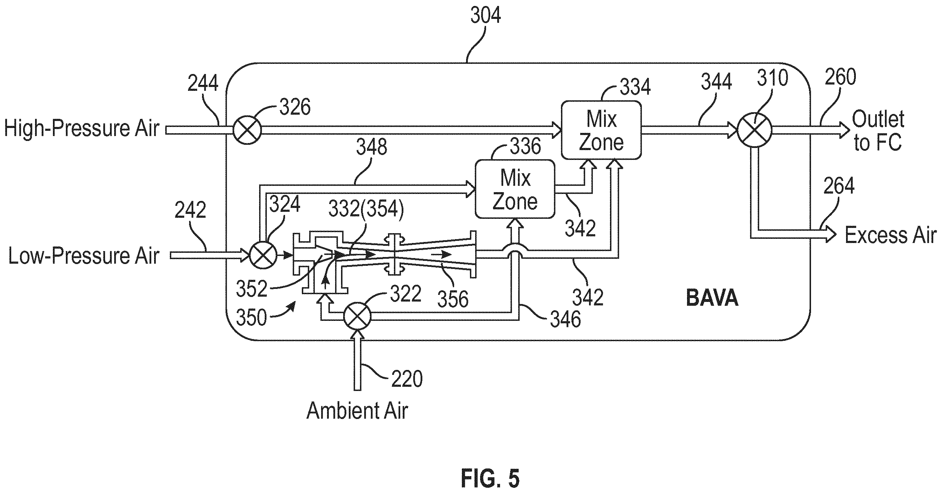

FIG. 5 is a schematic view of a bleed air valve assembly 304 according to an embodiment that can be used as the bleed air valve assembly 300 of the fuel cell system 200 shown in FIG. 3. Under certain conditions, the low-pressure ejector 350 may not be necessary to generate the low-pressure mixed air 342. In such cases, the ambient air 220 and the low-pressure bleed air 242 can be mixed in a third mixing chamber 336 or zone (also referred to herein as an ambient air mixing zone) to generate the low-pressure mixed air 342. The ambient air 220, the low-pressure bleed air 242, or both can be directed to the third mixing chamber 336 by bypassing the low-pressure ejector 350. The ambient air valve 322 can be a diverter valve that either directs the ambient air 220 to the suction of the low-pressure ejector 350 or to an ambient air bypass flow path 346. Similarly, the low-pressure bleed air valve 324 can be a diverter valve that either directs the low-pressure bleed air 242 to the nozzle 352 of the low-pressure ejector 350 or to a low-pressure bleed air bypass flow path 348. The ambient air bypass flow path 346 and the low-pressure bleed air bypass flow path 348 can be fluidly connected to the third mixing chamber 336 to provide the ambient air 220 and the low-pressure bleed air 242 to the third mixing chamber 336.

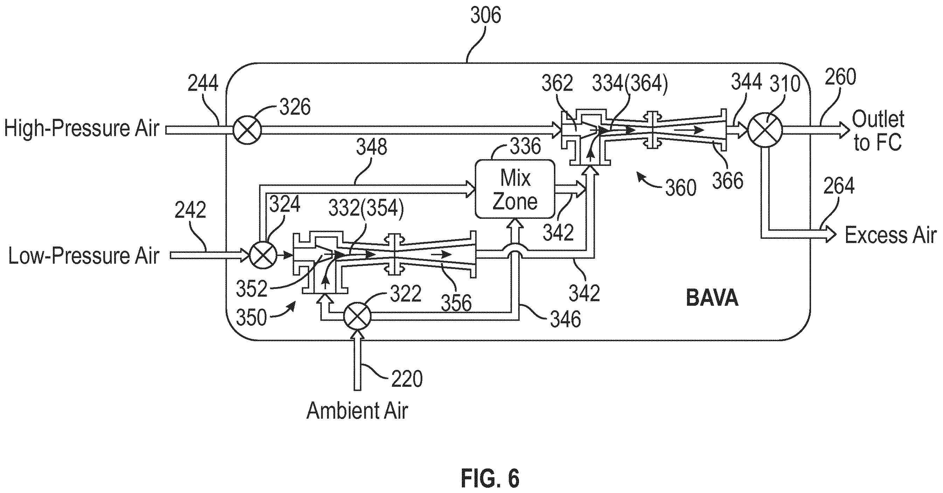

FIG. 6 is a schematic view of a bleed air valve assembly 306 according to an embodiment that can be used as the bleed air valve assembly 300 of the fuel cell system 200 shown in FIG. 3. The high-pressure bleed air 244 may also be used as a motive fluid in an ejector, which is referred to herein as a high-pressure ejector 360 for clarity with the low-pressure ejector 350, discussed above. The high-pressure ejector 360 can operate similarly to the low-pressure ejector 350 and the discussion of the low-pressure ejector 350 applies here. The high-pressure ejector 360 includes a nozzle 362, a mixing chamber 364, and a diffuser 366. The ambient air 220, the low-pressure bleed air 242, or the low-pressure mixed air 342 can be fluidly connected to the suction of the high-pressure ejector 360 and, when the high-pressure bleed air 244 flows the nozzle 362 of the high-pressure ejector 360, the high-pressure bleed air 244 draws the ambient air 220, the low-pressure bleed air 242, or the low-pressure mixed air 342 into the high-pressure ejector 360 to mix with the high-pressure bleed air 244 and to generate the high-pressure mixed air 344. The mixing chamber 364 can be the high-pressure mixed air 344.

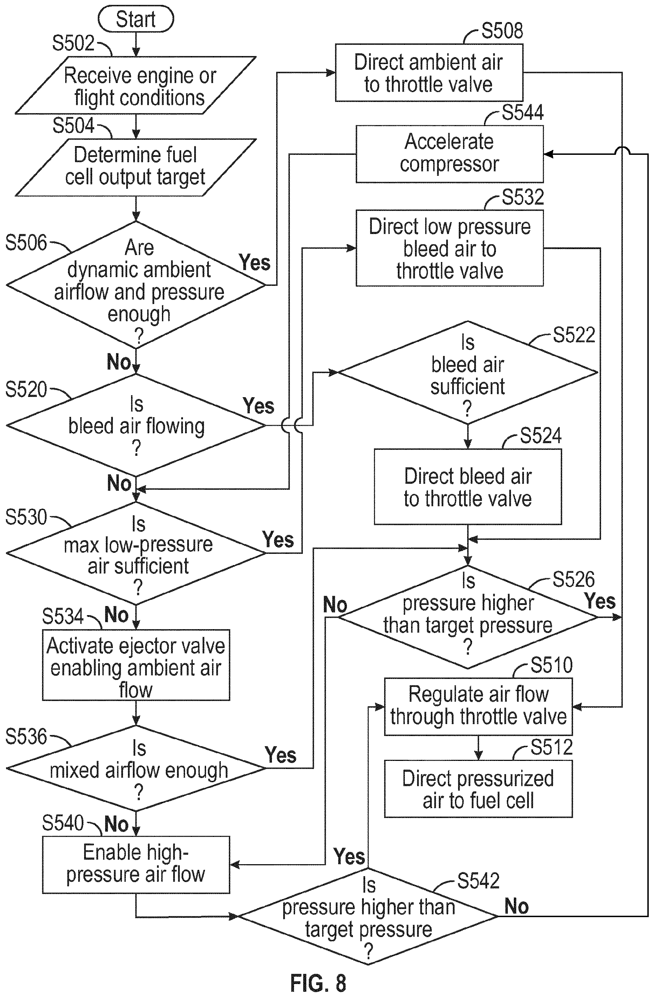

FIGS. 7 and 8 are flow charts showing methods of controlling the fuel cell system 200 and any one of the bleed air valve assemblies 302, 304, and 306 discussed above. The following discussion will use bleed air valve assembly 300 generically to refer to any one of the bleed air valve assemblies 302, 304, and 306 discussed above and makes reference to the components and features shown in FIGS. 3 to 6. The method shown in FIG. 7 and discussed below, can be a computer implemented method implemented using the controller 170 (FIGS. 2A to 2C) based on inputs provided the sensors 176 (FIGS. 2A to 2C and 4) and is discussed with reference to the controller 170 below, but other implementation methods may be used, such as where one or more of the steps are executed manually. The memory 174 (FIGS. 2A to 2C) can be a non-transitory computer readable storage medium having stored thereon a plurality of instructions to execute the method discussed below.

FIG. 7 is a flow chart showing a method of controlling the fuel cell system 200 and any one of the bleed air valve assemblies 302, 304, and 306 discussed above. In step S402, the controller 170 receives engine conditions from sensors in the turbine engine 100, flight conditions from, for example, sensors positioned on the aircraft 10, or both engine conditions and flight conditions. These conditions may also include an electrical load that should be provided by the fuel cell 210 (e.g., the desired net power output 218). The controller 170 determines the fuel cell output target in step S404 based on these inputs. The fuel cell output target also may be referred to herein as an electrical output target.

The method includes, in step S406, receiving compressed air, such as the bleed air 230 (e.g., one or both of the low-pressure bleed air 242 or the high-pressure bleed air 244). Then, in step S410, the controller 170 regulates the amount of compressed air (e.g., the bleed air 230), such as by regulating the airflow through the throttle valve 310, to generate the pressurized air 260 based on the fuel cell output target. The controller 170 then directs the pressurized air 260 to the fuel cell 210, in step S412. Step S410 may also include diverting some of the regulated air as excess air 264 in the manner discussed above.

The method can include receiving ambient air 220 in step S408. Regulating the amount of compressed air (e.g., the bleed air 230) to generate pressurized air 260 in step S410 can include mixing the compressed air (e.g., the bleed air 230) with the ambient air 220. Also, regulating the amount of compressed air (e.g., the bleed air 230) to generate pressurized air 260 in step S410 can include isolating the compressed air (e.g., the bleed air 230) to generate the pressurized air 260 from the ambient air 220. Additional details of regulating the compressed air (e.g., the bleed air 230), the ambient air 220, or both are discussed in more detail below with reference to FIG. 8 or elsewhere herein, and one or more of those steps may be incorporated as part of step S410.

The bleed air 230 has a maximum bleed air airflow for a compressor operating speed (e.g., the rotational speed of the HP compressor 114 in FIG. 2) and the ambient air has a dynamic ambient airflow for the current operating condition of the aircraft. In step S414, the method can include determining if the maximum bleed air airflow and the maximum ambient airflow is sufficient to meet the electrical output target. If the maximum bleed air airflow and the maximum ambient airflow is sufficient to meet the electrical output target, the method proceeds to step S410 as discussed above, but if the maximum bleed air airflow and the maximum ambient airflow is not sufficient to meet the electrical output target, the method proceeds to step S416 to accelerate the compressor (e.g., the HP compressor 114 in FIG. 2) increasing the volume, the pressure, or both of the bleed air 230. As used herein, determining if an airflow is sufficient or not sufficient can include comparing the airflow to a threshold, such as a pressure threshold, a volume threshold, or both. These thresholds may be based on the electrical output target, and a measured value or a calculated value below the threshold can be considered to be insufficient and a measured value or a calculated value above the threshold can be considered to be sufficient. Then, the method returns to step S406.

FIG. 8 is a more detailed flow chart showing a method of controlling the fuel cell system 200 and any one of the bleed air valve assemblies 302, 304, and 306 discussed above. In step S502, the controller 170 receives engine conditions from sensors in the turbine engine 100, flight conditions from, for example, sensors positioned on the aircraft 10, or both engine conditions and flight conditions. These conditions may also include an electrical load that should be provided by the fuel cell 210 (e.g., the desired net power output 218). The controller 170 determines the fuel cell output target in step S504 based on these inputs, and then checks if the dynamic ambient airflow and pressure of the ambient air 220 are sufficient to meet the fuel cell output target in step S506. If the ambient air 220 alone is sufficient, the method proceeds to step S508, where the controller 170 operates the bleed air valve assembly 300 to direct the ambient air 220 to the throttle valve 310, such as by opening the ambient air valve 322. Then, in step S510, the controller 170 regulates the airflow through the throttle valve 310 to generate the pressurized air 260 and to direct the pressurized air 260 to the fuel cell 210, in step S512. Step S510 may also include diverting some of the regulated air as excess air 264 in the manner discussed above.

The controller 170 determines the fuel cell output target in step S504 based on these inputs, and then checks or determines if the dynamic ambient airflow and pressure of the ambient air 220 are sufficient to meet the fuel cell output target in step S506. The fuel cell output target can be an electrical output target to be provided by the fuel cell. If the ambient air 220 alone is sufficient, the method proceeds to step S508, where the controller 170 operates the bleed air valve assembly 300 to direct the ambient air 220 to the throttle valve 310, such as by opening the ambient air valve 322. Then, in step S510, the controller 170 regulates the airflow through the throttle valve 310 to generate the pressurized air 260 and to direct the pressurized air 260 to the fuel cell 210, in step S512. Step S510 may also include diverting some of the regulated air as excess air 264 in the manner discussed above. With only the ambient air 220 being used to generate the pressurized air, the controller 170 isolates the bleed air 230 (e.g., one or both of the low-pressure bleed air 242 or the high-pressure bleed air 244), such as by closing the low-pressure bleed air valve 324, the high-pressure bleed air valve 326, or both, from the fuel cell 210.

In step S506, if the ambient air 220 is not sufficient, the method proceeds to step S520 to check if bleed air 230 (e.g., one or both of the low-pressure bleed air 242 or the high-pressure bleed air 244) is being provided. If so, the method proceeds to step S522 to determine if the bleed air 230 is sufficient in terms of volume, and, if the bleed air 230 provides a sufficient volume of air for the fuel cell 210, the bleed air 230 is directed to the fuel cell 210, in step S524. The method also includes checking, in step S526, if the pressure of the bleed air 230 is sufficient for the fuel cell output target. If the pressure is at or higher than the target pressure, the bleed air 230 is regulated through the throttle valve 310 in step S510 as discussed above.

Returning to step S520, if bleed air 230 is not currently being provided, the method proceeds to step S530 to determine if the maximum amount of low-pressure bleed air 242 that can be provided from the HP compressor 114 (FIG. 2) is of a sufficient volume for the fuel cell target. If so, the method proceeds to step S532 to direct the low-pressure bleed air 242 to the throttle valve 310, such as by operating the low-pressure bleed air valve 324, as discussed above. The method then checks the pressure of the low-pressure bleed air 242, in step S526, and, if the pressure is at or higher than the target pressure, the method proceeds to step S510 in the manner discussed above.

Returning to step S530, if the maximum amount of low-pressure bleed air 242 is not sufficient, the method proceeds to step S534 to activate the high-pressure ejector 360 or otherwise generate the low-pressure mixed air 342 in the manner discussed above. The method proceeds to step S536 to determine if the amount of low-pressure mixed air 342 is sufficient for the fuel cell output target and, if so, the method then checks the pressure of the low-pressure bleed air 242 in step S526, and the method proceeds in the manner discussed above. If the low-pressure mixed air 342 is not sufficient, the method proceeds to step S538 to provide a flow the high-pressure bleed air 244 and to generate the high-pressure mixed air 344 in the manner discussed above. The method then proceeds to step S542 to check if the pressure of the high-pressure mixed air 344 is sufficient for the fuel cell output target. If the pressure is at or higher than the target pressure, the bleed air 230 is regulated through the throttle valve 310 in step S510, as discussed above. If, however, the pressure is not sufficient, the method proceeds to step S544 to accelerate the compressor (e.g., the HP compressor 114 in FIG. 2) increasing the volume, the pressure, or both of the low-pressure bleed air 242 and the high-pressure bleed air 244. Then, the method returns to step S530.

As discussed above, the method checks, in step S526, if the ambient air 220, the low-pressure bleed air 242, or the low-pressure mixed air 342 is higher than the target pressure for the fuel cell. When the pressure is less than the target pressure, the method proceeds to step S540 and continues as discussed above.

The fuel cell system 200 discussed herein can use the compressor (e.g., the HP compressor 114) of the turbine engine 100 to generate pressurized air for use in the fuel cell 210 and meet the electrical demands of the aircraft 10. By doing so, the weight of the fuel cell system 200 can be reduced and the electrical efficiency of the fuel cell system 200 can be increased. The bleed air valve assembly 300 discussed above can be used to implement this configuration and achieve these advantages.

Further aspects of the present disclosure are provided by the subject matter of the following clauses.

A propulsion and electrical system for an aircraft includes a turbine engine, a bleed air valve assembly, and a fuel cell. The turbine engine includes a compressor to generate compressed air containing oxygen. a portion of the compressed air is bleed air containing oxygen. The bleed air valve assembly is fluidly coupled to the compressor to receive the bleed air and positionable to regulate the bleed air to generate pressurized air containing oxygen. The fuel cell is fluidly coupled to a hydrogen source to receive hydrogen and fluidly coupled to the compressor via the bleed air valve assembly to receive the pressurized air containing oxygen. The fuel cell generates electricity when receiving the hydrogen and the pressurized air.

The propulsion and electrical system of the preceding clause, wherein the turbine engine further includes a housing enclosing at least a portion of the turbine engine, the fuel cell being located in the housing.

The propulsion and electrical system of any preceding clause, wherein the bleed air includes high-pressure bleed air and low-pressure bleed air, the pressure of the high-pressure bleed air being higher than the pressure of the low-pressure bleed air, and wherein the bleed air valve assembly is fluidly coupled to the compressor to receive the high-pressure bleed air and the low-pressure bleed air as two separate air streams and the bleed air valve assembly is positionable to mix the high-pressure bleed air and the low-pressure bleed air to generate the pressurized air.

The propulsion and electrical system of any preceding clause, wherein the bleed air valve assembly is fluidly coupled to an ambient air source to receive ambient air and the bleed air valve assembly is positionable to mix the bleed air and the ambient air to generate mixed air, and wherein the bleed air valve assembly includes one or more deviation valves positionable to split the mixed air into the pressurized air and excess air.

The propulsion and electrical system of any preceding clause, wherein the bleed air includes high-pressure bleed air and low-pressure bleed air, the pressure of the high-pressure bleed air being higher than the pressure of the low-pressure bleed air, the bleed air valve assembly being fluidly coupled to the compressor to receive the high-pressure bleed air and the low-pressure bleed air as two separate air streams, wherein the bleed air valve assembly is fluidly coupled to an ambient air source to receive ambient air, and wherein the bleed air valve assembly is positionable to generate the pressurized air by mixing the high-pressure bleed air with the low-pressure bleed air, the ambient air, or both.

The propulsion and electrical system of the preceding clause, wherein the bleed air valve assembly includes an ejector including a nozzle and a mixing chamber, the mixing chamber being fluidly connected to the low-pressure bleed air, the ambient air source, or both, such that the ejector draws the low-pressure bleed air, the ambient air, or both into the mixing chamber when the high-pressure bleed air flows through the nozzle to mix the high-pressure bleed air with low-pressure bleed air, the ambient air, or both, the bleed air valve assembly being positionable to direct the high-pressure bleed air through the nozzle.

The propulsion and electrical system of any preceding clause, wherein the bleed air valve assembly is positionable to mix the low-pressure bleed air and the ambient air to generate a low-pressurized air mixture and positionable to mix the high-pressure bleed air and the low-pressurized air mixture to generate the pressurized air.

The propulsion and electrical system of any preceding clause, wherein the compressor includes a plurality of stages progressively compressing input air flowing therethrough to generate compressed air, wherein the low-pressure bleed air is drawn from a lower-pressure stage of the compressor and the high-pressure bleed air is drawn from a higher-pressure stage of the compressor, the lower-pressure stage being upstream of the higher-pressure stage relative to the flow of the input air.

The propulsion and electrical system of any preceding clause, wherein the turbine engine further includes a combustor, an engine shaft, and a turbine. The combustor is located in a core air flow path to receive a portion of the compressed air and fluidly coupled to a fuel source to receive fuel, the fuel being injected into the combustor to mix with the compressed air to generate a fuel and air mixture, the fuel and air mixture being combusted in the combustor to generate combustion gases. The engine shaft is drivingly coupled to the compressor. The turbine is located downstream of the combustor to receive the combustion gases. The turbine is drivingly coupled to the engine shaft and rotated in response to receiving the combustion gases.

The propulsion and electrical system of the preceding clause, wherein the compressor is a high-pressure compressor positioned in the core air flow path upstream of the combustor to generate the compressed air, wherein the engine shaft is a high-pressure shaft, and wherein the turbine is a high-pressure turbine.

The propulsion and electrical system of any preceding clause, wherein the turbine engine further includes an electrical motor drivingly coupled the engine shaft, the fuel cell being electrically coupled to the electrical motor to operate the electrical motor.

The propulsion and electrical system of the preceding clause, wherein the electrical motor is coupled to the engine shaft by an accessory gear box.

The propulsion and electrical system of any preceding clause, wherein the bleed air valve assembly is fluidly coupled to an ambient air source to receive ambient air and the bleed air valve assembly is positionable to mix the bleed air and the ambient air to generate the pressurized air.

The propulsion and electrical system of the preceding clause, wherein the bleed air valve assembly includes a throttle valve adjustable to regulate the flow of pressurized air from the bleed air valve assembly to the fuel cell.

The propulsion and electrical system of the preceding clause, wherein the throttle valve receives the bleed air and the ambient air as mixed air, and the throttle valve is adjustable to reduce the pressure of the mixed air to generate the pressurized air.

The propulsion and electrical system of any preceding clause, wherein the bleed air valve assembly includes an ejector including a nozzle and a mixing chamber, the mixing chamber being fluidly connected to the ambient air source such that the ejector draws the ambient air into the mixing chamber when the bleed air flows through the nozzle to mix the bleed air and the ambient air, the bleed air valve assembly being positionable to direct the bleed air through the nozzle.

The propulsion and electrical system of the preceding clause, wherein the bleed air valve assembly includes an ambient air mixing zone and an ambient air bypass flow path fluidly connecting the ambient air source with the ambient air mixing zone and bypassing the ejector, the bleed air being fluidly connected to the ambient air mixing zone, the bleed air valve assembly being positionable to direct the ambient air through the ambient air bypass flow path and to mix the bleed air with the ambient air in the ambient air mixing zone.

The propulsion and electrical system of the preceding clause, wherein the bleed air valve assembly includes a bleed air bypass flow path fluidly connecting the compressor with the ambient air mixing zone and bypassing the ejector to fluidly connect the bleed air with the ambient air mixing zone, the bleed air valve assembly being positionable to direct the bleed air through the bleed air bypass flow path and to mix the bleed air with the ambient air in the ambient air mixing zone.

An aircraft comprising the propulsion and electrical system of any preceding clause.

The aircraft of the preceding clause, wherein the fuel cell provides power to the aircraft as an auxiliary power unit.

The aircraft of any preceding clause, wherein the hydrogen source is a hydrogen tank to hold hydrogen located onboard the aircraft.

A method of generating electricity from a fuel cell for an aircraft includes determining an electrical output target to be provided by the fuel cell. The method also includes receiving compressed air containing oxygen from a compressor of a turbine engine and regulating the amount of compressed air to generate pressurized air containing oxygen. The method further includes providing the pressurized air to the fuel cell and providing hydrogen from a hydrogen source to the fuel cell to generate electricity at the electrical output target.

The method of the preceding clause, wherein the compressed air is bleed air from the compressor.

The method of the preceding clause, wherein the bleed air includes high-pressure bleed air and low-pressure bleed air, the pressure of the high-pressure bleed air being higher than the pressure of the low-pressure bleed air. The method includes receiving both the high-pressure bleed air and the low-pressure bleed air as two separate air streams and regulating the compressed air includes mixing the high-pressure bleed air and the low-pressure bleed air to generate the pressurized air.

The method of any preceding clause further includes receiving ambient air and regulating the compressed air includes mixing the bleed air with the ambient air to generate mixed air and at least a portion of the mixed air being used to generate the pressurized air.

The method of the preceding clause, further including diverting a portion of the mixed air as excess air.

The method of any preceding clause, wherein regulating the compressed air to generate the pressurized air includes mixing the high-pressure bleed air with the low-pressure bleed air, the ambient air, or both.

The method of any preceding clause, wherein the bleed air has a maximum bleed air airflow for a compressor operating speed and the ambient air has a dynamic ambient airflow for the current operating condition of the aircraft, and the method further includes determining if the maximum bleed air airflow and the maximum ambient airflow is sufficient to meet the electrical output target.

The method of the preceding clause, wherein, if the maximum bleed air airflow and the dynamic ambient airflow is not sufficient to meet the electrical output target, the method further includes accelerating the compressor.

The method of any preceding clause further includes determining if the dynamic ambient airflow of the ambient air is sufficient to meet the electrical output target, wherein, if the dynamic ambient airflow is sufficient to meet the electrical output target, the method includes regulating the flow of the ambient air as the pressurized air to the fuel cell and isolating the bleed air from the fuel cell.

The method of any preceding clause further includes determining if the pressure of the ambient air is sufficient to meet the electrical output target, wherein, if the pressure of the ambient airflow is sufficient to meet the electrical output target, the method includes regulating the flow of the ambient air as the pressurized air to the fuel cell and isolating the bleed air from the fuel cell.

The method of any preceding clause further includes determining if the dynamic ambient airflow of the ambient air and the pressure of the ambient air are sufficient to meet the electrical output target, wherein, if the dynamic ambient airflow of the ambient air and the pressure of the ambient airflow is sufficient to meet the electrical output target, the method includes regulating the flow of the ambient air as the pressurized air to the fuel cell and isolating the bleed air from the fuel cell.

The method of any preceding clause, wherein, if the dynamic ambient airflow, the pressure of the ambient air, or both is not sufficient to meet the electrical output target, the method includes mixing the bleed air with the ambient air to generate mixed air and the method includes regulating the flow of the mixed air as the pressurized air to the fuel cell.

The method of any preceding clause, wherein the bleed air is low-pressure bleed air and the mixed air is a low-pressure bleed air mixture.

The method of any preceding clause, wherein the bleed air is high-pressure bleed air and the mixed air is a high-pressure bleed air mixture.

The method of any preceding clause, further comprising operating the propulsion and electrical system of any preceding clause.

A non-transitory computer readable storage medium having stored thereon a plurality of instructions according to the method of any preceding clause.

The propulsion and electrical system of any preceding clause further comprising a controller configured to execute the method of any preceding clause.

The propulsion and electrical system of any preceding clause, wherein the controller is operatively coupled to one or more valves of the bleed air valve assembly to adjust the position of the one or more valves to execute the method of any preceding clause.

A propulsion and electrical system for an aircraft, the propulsion and electrical system comprising: a turbine engine including a compressor to generate compressed air containing oxygen, a portion of the compressed air being bleed air containing oxygen; a bleed air valve assembly fluidly coupled to the compressor to receive the bleed air and positionable to regulate the bleed air to generate pressurized air containing oxygen; and a fuel cell fluidly coupled to a hydrogen source to receive hydrogen and fluidly coupled to the compressor via the bleed air valve assembly to receive the pressurized air containing oxygen, the fuel cell generating electricity when receiving the hydrogen and the pressurized air.

The propulsion and electrical system of any preceding clause, wherein the turbine engine further includes a housing enclosing at least a portion of the turbine engine, the fuel cell being located in the housing.

The propulsion and electrical system of any preceding clause, wherein the bleed air includes high-pressure bleed air and low-pressure bleed air, the pressure of the high-pressure bleed air being higher than the pressure of the low-pressure bleed air, and wherein the bleed air valve assembly is fluidly coupled to the compressor to receive the high-pressure bleed air and the low-pressure bleed air as two separate air streams and the bleed air valve assembly is positionable to mix the high-pressure bleed air and the low-pressure bleed air to generate the pressurized air.

The propulsion and electrical system of any preceding clause, wherein the bleed air valve assembly is fluidly coupled to an ambient air source to receive ambient air and the bleed air valve assembly is positionable to mix the bleed air and the ambient air to generate mixed air, and wherein the bleed air valve assembly includes one or more deviation valves positionable to split the mixed air into the pressurized air and excess air.

The propulsion and electrical system of any preceding clause, wherein the bleed air includes high-pressure bleed air and low-pressure bleed air, the pressure of the high-pressure bleed air being higher than the pressure of the low-pressure bleed air, the bleed air valve assembly being fluidly coupled to the compressor to receive the high-pressure bleed air and the low-pressure bleed air as two separate air streams, wherein the bleed air valve assembly is fluidly coupled to an ambient air source to receive ambient air, and wherein the bleed air valve assembly is positionable to generate the pressurized air by mixing the high-pressure bleed air with the low-pressure bleed air, the ambient air, or both.

The propulsion and electrical system of any preceding clause, wherein the bleed air valve assembly includes an ejector including a nozzle and a mixing chamber, the mixing chamber being fluidly connected to the low-pressure bleed air, the ambient air source, or both, such that the ejector draws the low-pressure bleed air, the ambient air, or both into the mixing chamber when the high-pressure bleed air flows through the nozzle to mix the high-pressure bleed air with low-pressure bleed air, the ambient air, or both, the bleed air valve assembly being positionable to direct the high-pressure bleed air through the nozzle.

The propulsion and electrical system of any preceding clause, wherein the bleed air valve assembly is positionable to mix the low-pressure bleed air and the ambient air to generate a low-pressurized air mixture and positionable to mix the high-pressure bleed air and the low-pressurized air mixture to generate the pressurized air.

The propulsion and electrical system of any preceding clause, wherein the compressor includes a plurality of stages progressively compressing input air flowing therethrough to generate compressed air, wherein the low-pressure bleed air is drawn from a lower-pressure stage of the compressor and the high-pressure bleed air is drawn from a higher-pressure stage of the compressor, the lower-pressure stage being upstream of the higher-pressure stage relative to the flow of the input air.

The propulsion and electrical system of any preceding clause, wherein the turbine engine further includes: a combustor located in a core air flow path to receive a portion of the compressed air and fluidly coupled to a fuel source to receive fuel, the fuel being injected into the combustor to mix with the compressed air to generate a fuel and air mixture, the fuel and air mixture being combusted in the combustor to generate combustion gases; an engine shaft drivingly coupled to the compressor; and a turbine located downstream of the combustor to receive the combustion gases, the turbine drivingly coupled to the engine shaft and rotated in response to receiving the combustion gases.

The propulsion and electrical system of any preceding clause, wherein the compressor is a high-pressure compressor positioned in the core air flow path upstream of the combustor to generate the compressed air, wherein the engine shaft is a high-pressure shaft, and wherein the turbine is a high-pressure turbine.

The propulsion and electrical system of any preceding clause, wherein the turbine engine further includes an electrical motor drivingly coupled the engine shaft, the fuel cell being electrically coupled to the electrical motor to operate the electrical motor.

The propulsion and electrical system of any preceding clause, wherein the electrical motor is coupled to the engine shaft by an accessory gear box.

The propulsion and electrical system of any preceding clause, wherein the bleed air valve assembly is fluidly coupled to an ambient air source to receive ambient air and the bleed air valve assembly is positionable to mix the bleed air and the ambient air to generate the pressurized air.

The propulsion and electrical system of any preceding clause, wherein the bleed air valve assembly includes a throttle valve adjustable to regulate a flow of pressurized air from the bleed air valve assembly to the fuel cell.

The propulsion and electrical system of any preceding clause, wherein the throttle valve receives the bleed air and the ambient air as mixed air, and the throttle valve is adjustable to reduce the pressure of the mixed air to generate the pressurized air.

The propulsion and electrical system of any preceding clause, wherein the bleed air valve assembly includes an ejector including a nozzle and a mixing chamber, the mixing chamber being fluidly connected to the ambient air source such that the ejector draws the ambient air into the mixing chamber when the bleed air flows through the nozzle to mix the bleed air and the ambient air, the bleed air valve assembly being positionable to direct the bleed air through the nozzle.

The propulsion and electrical system of any preceding clause, wherein the bleed air valve assembly includes an ambient air mixing zone and an ambient air bypass flow path fluidly connecting the ambient air source with the ambient air mixing zone and bypassing the ejector, the bleed air being fluidly connected to the ambient air mixing zone, the bleed air valve assembly being positionable to direct the ambient air through the ambient air bypass flow path and to mix the bleed air with the ambient air in the ambient air mixing zone.

The propulsion and electrical system of any preceding clause, wherein the bleed air valve assembly includes a bleed air bypass flow path fluidly connecting the compressor with the ambient air mixing zone and bypassing the ejector to fluidly connect the bleed air with the ambient air mixing zone, the bleed air valve assembly being positionable to direct the bleed air through the bleed air bypass flow path and to mix the bleed air with the ambient air in the ambient air mixing zone.

An aircraft comprising the propulsion and electrical system of any preceding clause, wherein the fuel cell provides power to the aircraft as an auxiliary power unit.

An aircraft comprising the propulsion and electrical system of any preceding clause, wherein the hydrogen source is a hydrogen tank to hold hydrogen located onboard the aircraft.

Although the foregoing description is directed to certain embodiments, other variations and modifications will be apparent to those skilled in the art, and may be made without departing from the disclosure. Moreover, features described in connection with one embodiment may be used in conjunction with other embodiments, even if not explicitly stated above.

## Claims

1. A propulsion and electrical system (20, 22, 24, 26) for an aircraft (10), comprising:
a turbine engine (100) including a compressor (110) configured to generate compressed air (147) containing oxygen, wherein a portion of the compressed air is bleed air (230);
a bleed air valve assembly (300, 302, 304, 306) fluidly coupled to the compressor (110) and configured to regulate the bleed air (230) to generate pressurised air (260) containing oxygen; and
a fuel cell (210) fluidly coupled to a hydrogen source (250) to receive hydrogen (252), and fluidly coupled to the compressor (110) via the bleed air valve assembly (300, 302, 304, 306) to receive the pressurised air (260),
wherein the fuel cell (210) is configured to generate electricity when receiving the hydrogen (252) and the pressurised air (260).

2. The system of claim 1, wherein the bleed air (230) comprises high-pressure bleed air (244) and low-pressure bleed air (242), and the bleed air valve assembly (300, 302, 304, 306) is configured to receive and selectively mix the high-pressure bleed air (244) and the low-pressure bleed air (242) to generate the pressurised air (260).

3. The system of claim 2, wherein the bleed air valve assembly (300, 302, 304, 306) is further fluidly coupled to an ambient air source (226) to receive ambient air (220), and is configured to selectively mix the bleed air (230) and the ambient air (220).

4. The system of claim 3, wherein the bleed air valve assembly (300, 302, 304, 306) comprises at least one ejector (350, 360) including a nozzle (352, 362) and a mixing chamber (332, 334, 336, 354, 364), the mixing chamber being fluidly connected to at least one of the low-pressure bleed air (242), the high-pressure bleed air (244), or the ambient air (220), and wherein the ejector is configured to induce mixing of airflows by a low-pressure region created via the nozzle.

5. The system of any one of claims 2 to 4, wherein the bleed air valve assembly (300, 302, 304, 306) comprises a throttle valve (310) configured to regulate flow rate and pressure of the pressurised air (260) supplied to the fuel cell (210).

6. The system of any one of claims 1 to 5, wherein the compressor (110) includes a plurality of compression stages, and the high-pressure bleed air (244) and the low-pressure bleed air (242) are extracted from different stages of the compressor (110).

7. The system of any one of claims 1 to 6, wherein the turbine engine (100) further comprises:
a combustor (122) for receiving a portion of the compressed air (147) and fuel to generate combustion gases (149);
a turbine (130) downstream of the combustor (122) and coupled to an engine shaft (108, 109), the turbine (130) being configured to extract energy from the combustion gases; and
wherein the compressor (110) is driven by the engine shaft (108, 109).

8. The system of claim 7, wherein the turbine engine (100) further comprises an electrical motor (182) drivingly coupled to the engine shaft (108) and electrically coupled to the fuel cell (210), the motor (182) being configured to augment shaft power to improve compressor operability margin.

9. The system of claim 8, wherein the electrical motor (182) is coupled to the engine shaft (108) via an accessory gearbox (184).

10. The system of any one of claims 1 to 9, wherein the bleed air valve assembly (300, 302, 304, 306) comprises at least one valve (322, 324, 326) configured to selectively divert a portion of the bleed air (230), ambient air (220), or mixed air (342, 344) as excess air (264).

11. The system of any one of claims 1 to 10, wherein the bleed air valve assembly (300, 302, 304, 306) comprises:
an ambient air bypass flow path (346); and
a bleed air bypass flow path (348),
wherein both bypass flow paths are fluidly connected to a mixing zone (336) downstream of an ejector (350, 360), and wherein the bleed air valve assembly is configured to direct flows through either the ejector or the bypass paths.

12. The system of any one of claims 1 to 11, wherein the turbine engine (100) includes a housing (106, 160), and the fuel cell (210) is positioned within the housing.

13. The system of any one of claims 1 to 12, wherein the system is configured to isolate the bleed air (230) from the fuel cell (210) when ambient air (220) is sufficient to satisfy a required electrical output of the fuel cell (210).

14. An aircraft (10) comprising the propulsion and electrical system (20, 22, 24, 26) of any one of claims 1 to 13.

15. The aircraft of claim 14, wherein the fuel cell (210) provides power to the aircraft (10) as an auxiliary power unit and the hydrogen source (250) comprises a hydrogen storage tank (256) located onboard the aircraft (10).
